# EUROPÄISCHE PATENTSCHRIFT

(11) **EP 3 670 965 B1**
(45) Veröffentlichungstag und Bekanntmachung des Hinweises auf die Patenterteilung: **21.04.2021**
(21) Anmeldenummer: 19216853.2
(22) Anmeldetag: 17.12.2019
(51) Int. Cl.: F16H 57/04, B64D 35/02

(54) **GETRIEBEVORRICHTUNG FÜR EINEN MULTICOPTER**
TRANSMISSION DEVICE FOR A MULTICOPTER
DISPOSITIF DE TRANSMISSION POUR UN MULTICOPTER

(30) Priorität: 20.12.2018 DE 102018222513
(43) Veröffentlichungstag der Anmeldung: 24.06.2020
(73) Patentinhaber: ZF Friedrichshafen AG, 88046 Friedrichshafen (DE)
(72) Erfinder: Litzba, Jörg, 34233 Fuldatal (DE); Schmiedel, Jörg, 34121 Kassel (DE); Cudok, Matthias, 98617 Ritschenhausen (DE); Arnold, Uwe, 34132 Kassel (DE); Riesen, Waldemar, 34121 Kassel (DE); Lieder, Sergej, 34123 Kassel (DE)
(74) Vertreter: ZF Friedrichshafen AG

(56) Entgegenhaltungen:
- DE-A1-102011 076 527
- DE-A1-102014 007 550
- DE-A1-102017 201 342
- JP-A- 2008 144 803
- US-A1- 2004 163 409

## Beschreibung

Die Erfindung betrifft eine Getriebevorrichtung nach dem Oberbegriff des Patentanspruchs 1 für ein Luftfahrzeug, insbesondere für einen Multicopter. Die Erfindung betrifft zudem einen Multicopter mit einer solchen Getriebevorrichtung sowie ein Verfahren.

Aus der DE 10 2011 076 527 A1 ist ein elektrischer Fahrantrieb für ein Fahrzeug bekannt, mit einer elektrischen Maschine, die über ein Zwischengetriebe mit einem Abtrieb gekoppelt ist, wobei ein die elektrische Maschine und das Zwischengetriebe aufnehmendes Antriebsgehäuse vorgesehen ist, in dem ein gemeinsamer, passiv betriebener Ölkreislauf zum Schmieren und/oder Kühlen vorgesehen ist. Es ist ferner offenbart, dass eine als Hohlwelle ausgebildete Zwischenwelle koaxial zu einer als Hohlwelle ausgebildeten Rotorwelle der elektrischen Maschine derart hintereinander angeordnet sind, dass die beiden Hohlwellen eine axiale Öl-Durchführung in dem Antriebsgehäuse von einem ersten Gehäuseseitendeckel zu einem zweiten, gegenüberliegenden Gehäuseseitendeckel bilden.

Ein Multicopter ist ein Luftfahrzeug, das mehrere in einer Ebene angeordnete, senkrecht nach unten wirkende Rotoren oder Propeller benutzt, um Auftrieb und durch Neigung der Rotorebene auch Vortrieb zu erzeugen. Multicopter werden nach der Anzahl ihrer Rotoren auch Tricopter, Quadrocopter, etc. benannt.

Aus der nachveröffentlichten WO 2019/082043 A2 ist ein Vertikales Start- und Landeflugzeug (VTOL) mit mehreren Rotoren zum Erzeugen eines Auftriebs, wobei für jeden jeweiligen Rotor der VTOL eine Hilfskraftquelle (APS) und ein Umwandlungsgetriebesatz (TGS) aufweist, die beide dem jeweiligen Rotor zugeordnet sind und das VTOL ferner mindestens eine Hauptleistungsquelle (MPS) umfasst, wobei jedes TGS konfiguriert ist, um eine Ausgangsleistung in Richtung seines jeweiligen Rotors aus Eingangsleistungen zu bilden, die in das TGS von dem MPS und von dem dem jeweiligen Rotor zugeordneten APS empfangen werden.

Aus der DE 20 2006 013 909 U1 ist beispielhaft ein Quadrocopter gezeigt.

Aus dem Stand der Technik sind zudem Getriebevorrichtungen wie Hochtreiberstufen oder Reduzierstufen in der Bauart konventioneller Minus-Planetengetriebe bekannt, welche die Übersetzung einer der Getriebevorrichtung vorgeschalteten oder nachgeschalteten Elektromaschine verändern.

Die Aufgabe der vorliegenden Erfindung liegt darin, eine Getriebevorrichtung für ein Luftfahrzeug, insbesondere für einen Multicopter bereitzustellen, welche ein verbessertes Kühlkonzept zum Kühlen der Komponenten der Elektromaschine aufweist. Zudem soll die Getriebevorrichtung besonders kompakt bauen.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Multicopter ist zudem Gegenstand von Anspruch 10. Ein Verfahren zur Erzeugung eines Fluidnebels ist Gegenstand des Anspruchs 11.

Die Erfindung geht demnach aus von einer Getriebevorrichtung für einen Multicopter mit einer Antriebswelle, einer Abtriebswelle, einem Planetenradsatz und einer Elektromaschine, wobei der Planetenradsatz mehrere Elemente aufweist, nämlich zumindest ein erstes Element, ein zweites Element und ein drittes Element und wobei der Rotor der Elektromaschine mit der Antriebswelle in Verbindung steht.

Unter einer "Welle" ist im Sinne der Erfindung ein rotierbares Bauteil der Getriebevorrichtung zu verstehen, über welches je zugehörige Komponenten der Getriebevorrichtung drehfest miteinander verbunden sind oder über das eine derartige Verbindung bei Betätigung eines entsprechenden Schaltelements hergestellt wird. Die jeweilige Welle kann die Komponenten dabei axial oder radial oder auch sowohl axial und radial miteinander verbinden. So kann die jeweilige Welle auch als Zwischenstück vorliegen, über welches eine jeweilige Komponente zum Beispiel radial angebunden wird.

Mit "axial" ist im Sinne der Erfindung eine Orientierung in Richtung einer Längsmittelachse gemeint, entlang welcher der Planetenradsatz angeordnet ist. Unter "radial" ist dann eine Orientierung in Durchmesserrichtung einer Welle zu verstehen, die auf dieser Längsmittelachse liegt.

Der Planetenradsatz liegt bevorzugt als Minus-Planetensatz vor, wobei es sich bei dem ersten Element des Planetenradsatzes um ein Sonnenrad, bei dem zweiten Element des Planetenradsatzes um einen Planetensteg und bei dem dritten Element des Planetenradsatzes um ein Hohlrad handelt. Ein Minus-Planetensatz setzt sich auf dem Fachmann prinzipiell bekannte Art und Weise aus den Elementen Sonnenrad, Planetensteg und Hohlrad zusammen, wobei der Planetensteg mindestens ein, bevorzugt aber mehrere Planetenräder drehbar gelagert führt, die im Einzelnen jeweils sowohl mit dem Sonnenrad, als auch dem umliegenden Hohlrad kämmen, d.h. in Zahneingriff stehen.

Alternativ dazu könnte aber der Planetenradsatz als Plus-Planetensatz vorliegen, wobei es sich bei dem ersten Element des Planetenradsatzes dann um ein Sonnenrad, bei dem zweiten Element des Planetenradsatzes um ein Hohlrad und bei dem dritten Element des Planetenradsatzes um einen Planetensteg handelt. Bei einem Plus-Planetensatz sind ebenfalls die Elemente Sonnenrad, Hohlrad und Planetensteg vorhanden, wobei Letzterer mindestens ein Planetenradpaar führt, bei welchem das eine Planetenrad mit dem innenliegenden Sonnenrad und das andere Planetenrad mit dem umliegenden Hohlrad im Zahneingriff steht, sowie die Planetenräder untereinander kämmen.

Die Erfindung umfasst nun die technische Lehre, dass die Antriebswelle mit dem ersten Element drehfest verbunden ist, dass die Abtriebsswelle mit dem zweiten Element drehfest verbunden ist und dass das dritte Element an einem drehfesten Bauelement festgesetzt ist.

Die Getriebevorrichtung wirkt damit als Übersetzungsstufe zur Übersetzung einer im Kraftfluss vorgeschalteten Elektromaschine. D.h., mittels der erfindungsgemäßen Getriebevorrichtung erfolgt eine Übersetzung der Drehzahl der Elektromaschine ins Langsame.

Die Antriebswelle, die Abtriebswelle, der Planetenradsatz und die Elektromaschine sind bevorzugt koaxial zueinander angeordnet. Bevorzugt ist die Elektromaschine axial benachbart zum Planetenradsatz angeordnet, sodass sich die erfindungsgemäße Getriebevorrichtung insgesamt durch eine kompakte und leichte Bauweise auszeichnet.

Dass zwei Bauelemente der Getriebevorrichtung "verbunden" bzw. "gekoppelt" sind bzw. "miteinander in Verbindung stehen", meint im Sinne der Erfindung eine permanente Koppelung dieser Bauelemente, so dass diese nicht unabhängig voneinander rotieren können. Insofern ist zwischen diesen Bauelementen, bei welchen es sich um Elemente der Planetenradsätze und/oder auch Wellen und/oder ein drehfestes Bauelement der Getriebevorrichtung handeln kann, kein Schaltelement vorgesehen, sondern die entsprechenden Bauelemente sind mit gleichbleibender Drehzahlabhängigkeit miteinander gekoppelt.

Eine jeweilige drehfeste Verbindung der rotierbaren Komponenten der Getriebevorrichtung ist erfindungsgemäß bevorzugt über eine oder auch mehrere zwischenliegende Wellen realisiert, die dabei bei räumlich dichter Lage der Komponenten auch als kurze Zwischenstücke vorliegen können. Konkret können die Komponenten, die permanent drehfest miteinander verbunden sind, dabei jeweils entweder als drehfest miteinander verbundene Einzelkomponenten oder auch einstückig vorliegen. Im zweitgenannten Fall werden dann die jeweiligen Komponenten und die ggf. vorhandene Welle durch ein gemeinsames Bauteil gebildet, wobei dies insbesondere eben dann realisiert wird, wenn die jeweiligen Komponenten im Getriebe räumlich dicht beieinander liegen.

Ein Festsetzen erfolgt insbesondere durch drehfestes Verbinden mit einem drehfesten Bauelement der Getriebevorrichtung, bei welchem es sich vorzugsweise um eine permanent stillstehende Komponente handelt, bevorzugt um ein Gehäuse der Getriebevorrichtung, einen Teil eines derartigen Gehäuses oder ein damit drehfest verbundenes Bauelement.

Unter der "Verbindung" des Rotors der Elektromaschine mit der Antriebswelle der Getriebevorrichtung ist im Sinne der Erfindung eine derartige Verbindung zu verstehen, dass zwischen dem Rotor der Elektromaschine und der Antriebswelle eine gleichbleibende Drehzahlabhängigkeit vorherrscht.

Entsprechend einer Ausführungsform der Erfindung ist eine Getriebevorrichtung vorgesehen, wobei zur Förderung eines ersten Fluids in einem ersten Fluidkreislauf zur Schmierung und/oder Kühlung der Komponenten der Getriebevorrichtung eine Fördervorrichtung innerhalb der als Hohlwelle ausgeführten Abtriebswelle vorgesehen ist. Zudem ist zumindest eine erste Fluidleitung vorgesehen ist, die ausgebildet ist, das innerhalb der Abtriebswelle geförderte erste Fluid den Komponenten zur Verfügung stellen.

Bei dem ersten Fluid kann es sich beispielsweise um Öl oder um ein anderes Kühlmedium vergleichbarer Art handeln. Zu den Komponenten der Getriebevorrichtung gehören insbesondere der Planetenradsatz und die Elektromaschine. Das erste Fluid kann insbesondere aus einem Fluidreservoir stammen, bei welchem es sich um einen Ölsumpf oder eine Ölwanne handeln kann. Bei der ersten Fluidleitung handelt es sich bspw. um einen Kanal oder eine Bohrung, welche den Hohlraum der Abtriebswelle mit den Komponenten fluidtechnisch verbindet. Die Führung der Fördervorrichtung durch die hohlförmige Abtriebswelle hindurch ermöglicht einen kompakten und leichten Aufbau.

Unter einer fluidtechnischen Verbindung ist eine Verbindung zwischen zwei fluidführenden Bauteilen oder Kanälen zu verstehen, die einen Volumenstrom des Kühlmittels bewirkt.

Besonders bevorzugt ist es, wenn die Fördervorrichtung ein am drehfesten Bauelement festgesetztes und in der Abtriebswelle geführtes stangenförmiges Element umfasst, welches an seinem Außenumfang ein Profil aufweist, das derart ausgebildet ist, dass das zur Verfügung gestellte erste Fluid bei rotierender Abtriebswelle gegen die Schwerkraft gefördert wird, also von axial unten nach axial oben. Das stangenförmige Element kann bspw. eine Gewindestange sein. Es ist jedoch auch denkbar, die Innenfläche der Abtriebswelle mit einem Profil zu versehen. Auch in diesem Fall wird das erste Fluid radial zwischen stangenförmigem Element und der Abtriebswelle gefördert.

Das Versehen des stangenförmigen Elements mit einem Profil hat jedoch den Vorteil, dass die Förderung des Fluids optimal an die erste Fluidleitung geführt werden kann, da deren Öffnung bevorzugt gegenüber dem stangenförmigen Element an der Innenfläche der Abtriebswelle angeordnet ist.

Zudem ist eine Getriebevorrichtung bevorzugt, wobei
die Getriebevorrichtung ein erstes Volumen und ein zweites Volumen aufweist;
in dem ersten Volumen der Planetenradsatz angeordnet ist und in dem zweiten Volumen die Elektromaschine angeordnet ist;
   die erste Fluidleitung den Hohlraum der Abtriebswelle mit dem ersten Volumen fluidtechnisch verbindet;
das erste Volumen zudem ausgebildet ist, zumindest teilweise das erste Fluid zur Schmierung und/oder Kühlung der Elemente des Planetenradsatzes aufzufangen;
eine zumindest zweite Fluidleitung vorgesehen ist, die das erste Volumen mit dem zweiten Volumen fluidtechnisch verbindet;
die zwei Volumina und die erste Fluidleitung derart konfiguriert sind, dass bei stillstehender Abtriebswelle die Förderung des ersten Fluids vom ersten Volumen in das zweite Volumen verhindert wird und bei rotierender Abtriebswelle zugelassen wird.

Der Vorteil an dieser Ausführung ist, dass der Planetenradsatz auch bei einem Stillstand der Abtriebswelle geschmiert und/oder gekühlt ist oder bleibt. Das erste Volumen, insbesondere der Planetenradsatz ist in axialer Richtung zum zweiten Volumen, insbesondere zur Elektromaschine insofern dicht, dass in axialer Richtung bei Stillstand der Abtriebswelle ein Teil des Planetenradsatz oder der gesamte Planetenradsatz mit dem ersten Fluid in Berührung bleibt. So sind insbesondere die Elemente des Planetenradsatzes auch beim Startvorgang ausreichend geschmiert.

Das erste Fluid kann einerseits durch den Förderdruck der Fördervorrichtung vom ersten Volumen in die zweite Fluidleitung und damit in das zweite Volumen gelangen. Die zweite Fluidleitung kann insofern als ein Überlauf ausgebildet sein, sodass das erste Fluid bspw. wenn der Planetenradsatz vollständig mit erstem Fluid benetzt ist, in das zweite Volumen abfließen kann. Das erste Fluid kann aber durch die rotierenden Elemente in die zweite Fluidleitung geschleudert werden.

Weiterhin ist es bevorzugt, wenn
in dem zweiten Volumen ein sich radial erstreckendes Element angeordnet ist, das mit dem Rotor der Elektromaschine und/oder mit der Antriebswelle drehfest verbunden ist und welches ausgebildet ist, das aus dem ersten Volumen ins zweite Volumen geförderte erste Fluid aufzufangen;
ein Filterelement vorgesehen ist, dass ausgebildet ist, das aufgefangene und anschließend radial nach außen geschleuderte erste Fluid in einen Fluidnebel zu wandeln.

Das Filterelement kann bspw. in der Form eines Siebes oder einer Nebeldüse vorliegen. Das in Rotation versetzte Fluid wird an dem Filterelement zerstäubt.

Für den Fall, dass es sich bei dem ersten Fluid um Öl handelt, kann durch das Filterelement ein feiner Ölnebel erzeugt werden, der gleichmäßig die Komponenten der Elektromaschine kühlen kann. Das sich radial erstreckende Element kann Teil eines Rotorträgers sein, der den Rotor der Elektromaschine mit der Antriebswelle verbindet. Es kann aber auch ein Teil sein, das lediglich mit dem Rotor oder mit der Antriebswelle verbunden ist. Ist das Element kein Rotorträger oder kein Teil eines Rotorträgers, so sollte das Element axial oberhalb des Trägers angeordnet sein.

Besonders bevorzugt ist es, wenn das Filterelement an einem radial äußeren Ende des sich radial erstreckenden Elements angeordnet ist, da hierbei die Zentrifugalkräfte besonders zur Geltung kommen. Je höher die Rotation, desto feiner die Zerstäubung an dem Filterelement. Das Material des Filterelements ist bevorzugt aus Aluminium oder Keramik oder aus Legierungen, die diese Stoffe enthalten. Es kann aber auch aus anderen harten und verschleißfreien Materialien gefertigt sein. Die genannten bevorzugten Materialen weisen zudem glatte Oberflächen auf, so dass eine Verstopfung des Filterelements erschwert wird.

Insgesamt lässt sich somit eine Getriebevorrichtung mit einem ersten Kühlkreislauf bereitstellen, der in vorteilhafter Weise vorhandenen Bauraum ausnutzt und sowohl Planetenradsatz und/oder Elektromaschine ohne zusätzlichen Energieaufwand ausreichend schmiert und kühlt.

In einer weiteren Ausgestaltung der Erfindung ist eine Getriebevorrichtung vorgesehen, wobei zur Förderung eines zweiten Fluids in einem zweiten Fluidkreislauf zur Kühlung von Komponenten einer Leistungselektronik und/oder zur Kühlung des ersten Fluids eine Pumpe vorgesehen ist, deren inneres Pumpenrad mit der Abtriebswelle drehfest verbunden ist.

Bevorzugt ist es, wenn der zweite Fluidkreislauf eine dritte Fluidleitung umfasst, durch welche das zweite Fluid gefördert werden kann, wobei die dritte Fluidleitung derart angeordnet ist, dass
das zweite Fluid in dem zweiten Fluidkreislauf zunächst in Wärmeaustausch mit einer kühleren Umgebungsluft und
anschließend in Wärmeaustausch mit Komponenten der Leistungselektronik (16), und
anschließend in Wärmeaustausch mit dem ersten Fluid treten kann,
bevor das zweite Fluid mittels der Pumpe erneut in Wärmeaustausch mit der Umgebungsluft treten kann.

Diese bevorzugte Ausführungsform beschreibt den zweiten Kühlkreislauf ausgehend von der Pumpe die das heiße zweite Fluid zum Abkühlen mit der Umgebungsluft fördert. Das kalte Fluid wird dann zur Kühlung der Komponenten der Leistungselektronik verwendet. Dadurch wärmt sich das zweite Fluid wieder auf. Es ist jedoch noch ausreichend kühl, um im Anschluss das erste Fluid zu kühlen.

Der zweite Kühlkreislauf kann auch aus der Sicht des abgekühlten zweiten Fluids beschrieben werden, wobei
das zweite Fluid in dem zweiten Fluidkreislauf zunächst in Wärmeaustausch mit Komponenten der Leistungselektronik; und
anschließend in Wärmeaustausch mit dem ersten Fluid; und
anschließend in Wärmeaustausch mit der Umgebungsluft treten kann;
bevor das zweite Fluid mittels der Pumpe erneut in Wärmeaustausch mit den Komponenten der Leistungselektronik treten kann.

Durch einen derartigen zweiten Kühlkreislauf kann in vorteilhafter Weise sowohl die Leistungselektronik als auch das erste Fluid gekühlt werden. Die Kühlung erfolgt dabei bevorzugt in Reihe also nacheinander. Bei dem zweiten Fluid handelt es sich bevorzugt um Wasser oder um ein anderes vergleichbares Medium.

Ist bspw. das erste Fluid Öl und das zweite Fluid Wasser, so wird zu einem Zeitpunkt das heiße Öl an dem kalten Wasser abgekühlt. Das nunmehr heiße Wasser wird an das Getriebegehäuse transportiert, welche wiederum in Kontakt mit kalter Umgebungsluft steht. Mit anderen Worten wird das heiße Wasser durch den kalten Abwind des mit der Abtriebswelle verbundenen Propellers abgekühlt. Das kalte Wasser kühlt nun wiederum zunächst die Leistungselektronik und anschließend, mit dem verbleibenden Temperaturunterschied das Öl, welches sich zwischenzeitlich durch die Kühlung des Planetenradsatzes und der Elektromaschine erwärmt hatte.

Zudem ist eine Getriebevorrichtung bevorzugt, umfassend Komponenten einer Leistungselektronik, welche koaxial an einem axial unteren Ende der Getriebevorrichtung angeordnet sind. Es ist besonders bevorzugt, wenn die Leistungselektronik axial auf Höhe der Pumpe angeordnet ist. So lässt sich eine Getriebevorrichtung mit Kühlkreislauf und Leistungselektronik besonders kompakt bauen.

Die Einheit umfassend die Getriebevorrichtung, das Planetengetriebe, die Elektromaschine, die Leistungselektronik sowie die zwei Kühlkreisläufe stellt eine Antriebseinheit für einen Multicopter dar. Diese Antriebseinheit ist bevorzugt eine modulare Antriebseinheit, die für eine Vielzahl von Multicoptern vorgesehen sein kann.

Nach einem weiteren Aspekt der Erfindung wird ein Multicopter mit einer vorstehend beschriebenen Getriebevorrichtung bereitgestellt.

Nach einem weiteren Aspekt wird ein Verfahren zur Erzeugung eines Fluidnebels innerhalb einer Getriebevorrichtung mit einer Elektromaschine bereitgestellt, wobei zunächst ein erstes Fluid auf einen Rotorträger, der den Rotor der Elektromaschine mit einer Welle der Getriebevorrichtung verbindet, gefördert wird und anschließend durch eine Drehung des Rotors nach radial außen gegen ein Filterelement geschleudert wird, sodass ein Fluidnebel entsteht.

Die vorstehenden Ausführungen, insbesondere betreffend die Kühlung der Komponenten mittels eines Fluidnebels, bevorzugt Ölnebel, sind ebenfalls auf das Verfahren anwendbar.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausführungsformen der Erfindung, die nachfolgend erläutert werden, sind in den Zeichnungen dargestellt. Es zeigt:
Fig. 1 eine schematische Ansicht einer bevorzugten Getriebevorrichtung eines Multicopters;
Fig. 2 die Getriebevorrichtung aus Fig. 1 in einer anderen Ansicht;
Fig. 2a einen Kühlkreislauf der Getriebevorrichtung in einer schematischen Ansicht;
Fig. 3 die Getriebevorrichtung aus Fig. 1 in einer anderen Ansicht;
Fig. 4 ein Kühlschema in einer Prinzipskizze;
Fig. 5 einen Multicopter mit einer Getriebevorrichtung nach Fig. 1 bzw. 2 in einer schematischen Ansicht von oben; und
Fig. 6a bis 8b die Getriebevorrichtung aus 2 in zusätzlichen Ansichten und Perspektiven.

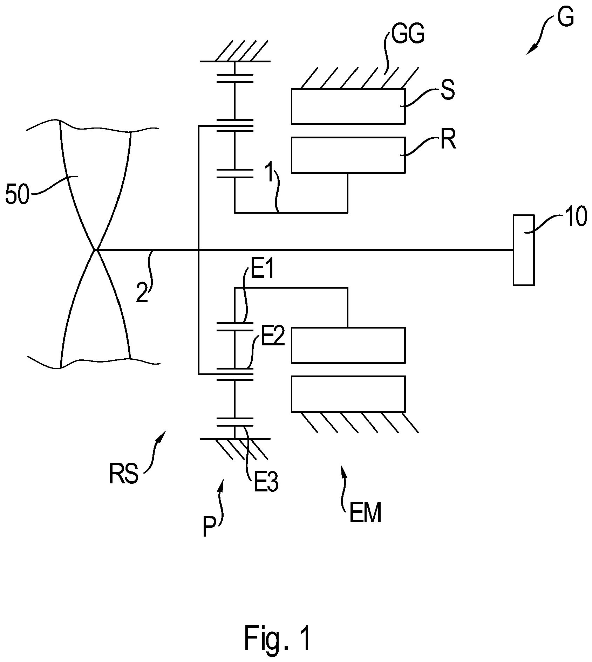

Aus Fig. 1 geht eine schematische Darstellung der Getriebevorrichtung G gemäß einer ersten Ausführungsform der Erfindung hervor. Wie zu erkennen ist, setzt sich die Getriebevorrichtung G aus einem Radsatz RS und einer Elektromaschine EM zusammen, die gemeinsam in dem Gehäuse der Getriebevorrichtung G angeordnet sind. Der Radsatz RS umfasst einen Planetenradsatz P wobei der Planetenradsatz P ein erstes Element E1, ein zweites Element E2 und je ein drittes Element E3 aufweist. Das erste Element E1 ist dabei durch ein Sonnenrad des Planetenradsatzes P gebildet, während das zweite Element E2 des Planetenradsatzes P als Planetensteg und das dritte Element E3 des Planetenradsatzes P als Hohlrad vorliegt.

Im vorliegenden Fall liegt also der Planetenradsatz P als Minus-Planetensatz vor, dessen Planetensteg zumindest ein Planetenrad drehbar gelagert führt, welches sowohl mit dem radial innenliegenden Sonnenrad, als auch dem radial umliegenden Hohlrad im Zahneingriff steht. Besonders bevorzugt sind aber bei dem Planetenradsatz P mehrere Planetenräder vorgesehen.

Wie aus Fig. 1 ferner hervorgeht, ist das Sonnenrad E1 mit der Antriebswelle 1 drehfest verbunden. Der Planetensteg E2 ist mit der Abtriebswelle 2 drehfest verbunden. Das Hohlrad E3 ist permanent am dem Getriebegehäuse GG festgesetzt und damit an einer Drehung gehindert.

Die Antriebswelle 1 ist drehfest mit einem Rotor R einer Elektromaschine EM der Getriebevorrichtung G verbunden, wobei die Elektromaschine EM koaxial zum Planetenradsatz P vorgesehen ist. Die Elektromaschine EM ist axial benachbart zum Planetenradsatz P angeordnet. Ein Stator S der Elektromaschine EM ist an einem drehfesten Bauelement GG der Getriebevorrichtung G festgesetzt, bei welchem es sich insbesondere um das Gehäuse der Getriebevorrichtung G oder einen Teil des Gehäuses handelt.

Ferner ist eine Pumpe 10 vorgesehen, deren inneres Pumpenrad 11 mit der Abtriebswelle 2 drehfest verbunden ist. Die Pumpe 10 ist dazu eingerichtet, Wasser in einem zweiten Kühlkreislauf zu fördern. Die Pumpe 10 ist an einem axial unteren Ende der Getriebevorrichtung G angeordnet.

Am axial gegenüberliegenden Ende der Pumpe 10 ist ein Propeller 50 mit der Abtriebswelle 2 drehfest verbunden. Der Propeller 50 ist an einem axial oberen Ende der Getriebevorrichtung G angeordnet.

Die Ausführung gemäß Fig. 1 zeigt eine Getriebevorrichtung G mit lediglich einer Reduzierstufe. Es ist selbstverständlich möglich, einen Radsatz RS mit mehreren in Reihe geschalteten Planetenradsätzen vorzusehen. In diesem Fall treibt der Planetensteg E2 das Sonnenrad des benachbarten Planetenradsatzes an. Der Planetensteg des benachbarten Planetenradsatzes bildet dann wiederum den Abtrieb. Das Hohlrad des benachbarten Planetenradsatzes ist ebenfalls festgesetzt.

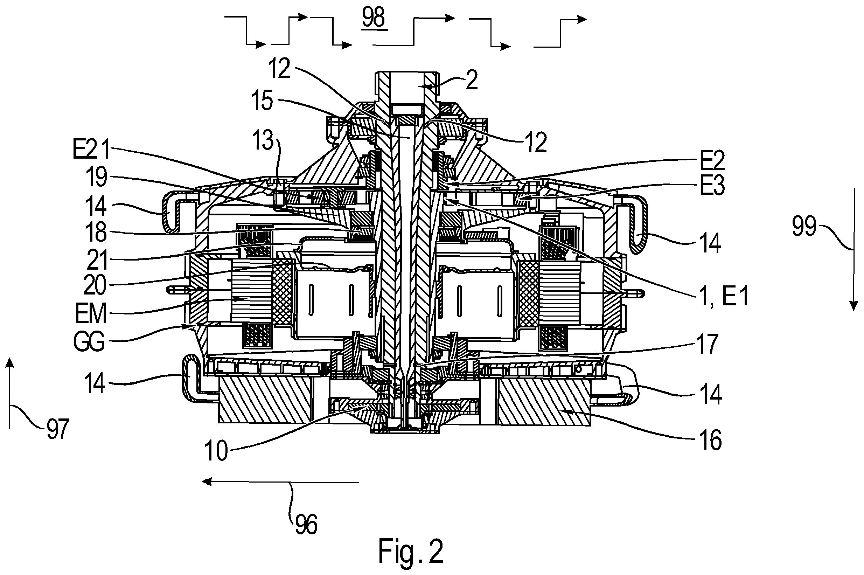

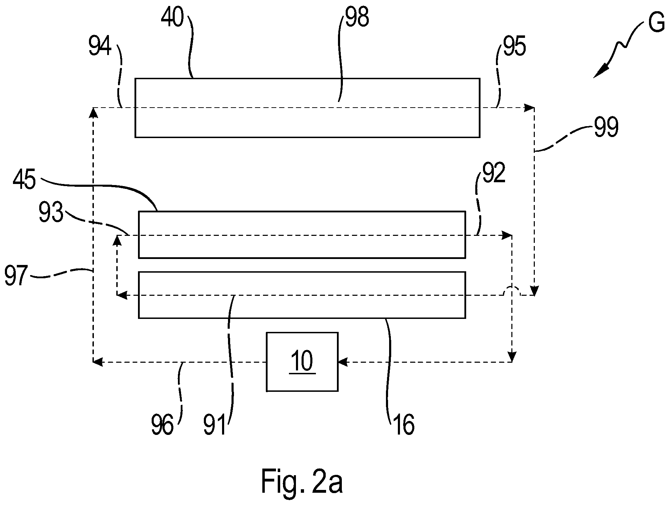

Fig. 2 zeigt die Getriebevorrichtung G in einer weiteren Ansicht und mit zusätzlichen Merkmalen.

In der hohlförmigen Abtriebswelle 2 ist eine Fördervorrichtung in Form einer Gewindestange 15 geführt. Die Gewindestange 15 weist an ihrem Außenumfang ein Gewinde auf. Die Gewindestange 15 erstreckt sich nahezu über die gesamte Länge der Abtriebswelle 2. Die Gewindestange 15 ist am unteren axialen Ende an dem drehfesten Bauelement GG befestigt. Am oberen axialen Ende lagert sie an einer Gleitlagerbuchse. Die Komponenten der Leistungselektronik 16 sind koaxial zur Pumpe 10 am unteren Ende der Getriebevorrichtung G angeordnet. So ergibt sich eine bevorzugte axiale Reihenfolge Leistungselektronik 16, Elektromaschine EM und Planetenradsatz P, wobei die Leistungselektronik 16 radial außerhalb der Pumpe 10 angeordnet ist.

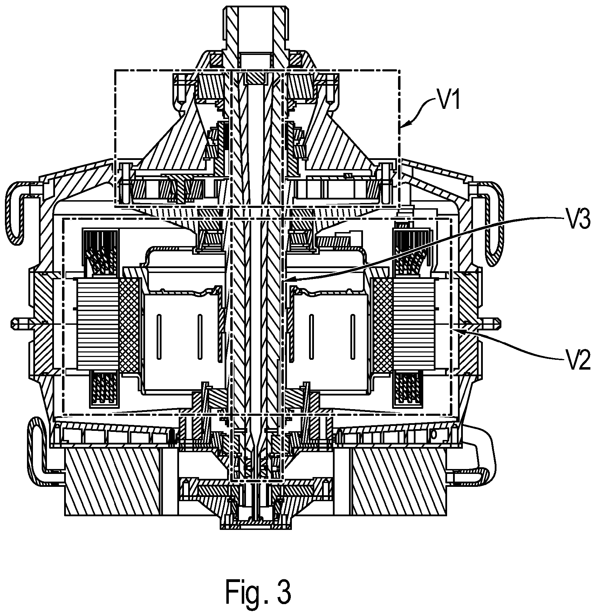

Nach dem Prinzip der archimedischen Schraube wird bei rotierender Abtriebswelle 2 Öl aus einem Ölsumpf 17 gegen die Schwerkraft nach oben in eine erste Fluidleitung 12 gefördert. Die erste Fluidleitung 12 ist gegenüber der Längsachse der Abtriebswelle 2 in einem Winkel von ca. 45° geneigt. Die erste Fluidleitung 12 verbindet fluidtechnisch den Förderraum V3 der Abtriebswelle 2 mit demjenigen Raum oder ersten Volumen V1 in welchem der Planetenradsatz P angeordnet ist. Zu den Volumen vgl. Fig. 3.

Das erste Volumen V1 ist nach axial unten mit einer Dichtung 18 abgedichtet, sodass der Planetenradsatz P permanent mit Öl benetzt ist. Das Öl sammelt sich im Wesentlichen auf dem Lagerträger 19. Dadurch ist auch während eines Startvorgangs ausreichend Schmierung vorhanden.

Eine als Überlauf ausgebildete zweite Fluidleitung 13 verbindet fluidtechnisch das erste Volumen V1 mit einem zweiten Raum oder Volumen V2, in welchem die Elektromaschine EM angeordnet ist.

Das Öl tropft im weiteren Verlauf aus dem Überlauf 13 auf einen Rotorträger der Elektromaschine EM. Durch die Rotation wird das auf dem Rotorträger 20 aufgefangene Öl radial nach außen geschleudert, wo es dann an einem als Nebeldüse ausgebildeten Filterelement 21 zerstäubt wird. Hierdurch wird ein feiner Ölnebel erzeugt, der die Komponenten der Elektromaschine gleichmäßig kühlt. Anschließend gelangt das Öl wieder in den Ölsumpf 17. Der Ölkreislauf ist geschlossen. Durch das Abkühlen der Getriebekomponenten wird das Öl erwärmt.

Die Getriebevorrichtung gemäß Fig. 2 umfasst neben dem Ölkreislauf einen Wasserkreislauf, also einen zweiten Kühlkreislauf der vorgesehen ist, das Öl aber auch die Komponenten der Leistungselektronik 16 zu kühlen.

Die Förderung des Wassers erfolgt über die Pumpe 10.

Ausgehend von einem an der Umgebungsluft abgekühlten Wasser kann der Kühlkreislauf wie folgt beschrieben werden. Die Kühlung des Wassers erfolgt in einem ersten Wärmetauscher 40, der an einem axial oberen Ende der Getriebevorrichtung angeordnet ist.

Die dritte Fluidleitung 14 zur Führung des Wassers ist derart angeordnet, dass das Wasser zunächst in Wärmeaustausch mit Komponenten der Leistungselektronik 16; und anschließend in Wärmeaustausch mit dem Öl; und anschließend wieder in Wärmeaustausch mit der Umgebungsluft treten kann. Die dritte Fluidleitung 14 führt das Wasser zum Abkühlen mit der Umgebungsluft bspw. in Strömungskanälen bis unter das Getriebegehäuse GG.

D.h., das kalte Wasser wird zunächst in Pfeilrichtung 99 axial von oben nach unten gepumpt. Im Anschluss kühlt das Wasser die Komponenten der Leistungselektronik. Im Anschluss daran wird in einem zweiten Wärmetauscher 45 das Öl gekühlt, das seinerseits durch die Kühlung der Elektromaschine EM erhitzt wurde. Der Wärmetauscher 45 ist axial oberhalb der Komponenten der Leistungselektronik 16 angeordnet.

Bei dem Wärmeaustausch des Wassers mit den Komponenten der Leistungselektronik 16 werden diese gekühlt, wodurch das Wasser erwärmt wird. Im Anschluss daran kühlt das Wasser das Öl, sodass das Wasser noch wärmer wird. Das erwärmte Wasser wird nun an dem Propellerabwind abgekühlt. Das gekühlte Wasser kann anschließend wieder durchgepumpt werden. Der Wasserkreislauf ist geschlossen.

Durch einen derartigen zweiten Kühlkreislauf kann in vorteilhafter Weise sowohl die Leistungselektronik 16 als auch das Öl gekühlt werden. Die Kühlung erfolgt dabei in Reihe, also nacheinander, wobei zuerst die Leistungselektronik 16 gekühlt wird.

Der Kreislauf des Wassers ist mit Pfeilen 96, 97, 98 und 99 angedeutet. Ausgehend von der Pumpe wird da heiße Wasser zunächst auf direktem Wege nach radial au-βen gefördert 96. Danach wird es auf direktem Wege nach oben gefördert 97. Am axial oberen Ende der Getriebevorrichtung tritt das Wasser in den ersten Wärmetauscher 40 ein. Dieser ist labyrinthförmig aufgebaut, sodass das heiße Wasser optimal abgekühlt werden kann. Mit gewinkelten Pfeilen 98 ist eine labyrinthförmige Leitung angedeutet, die unmittelbar unterhalb des Gehäuses GG verläuft. Anschließend wird das Wasser nach unten gefördert 99. Es kann nun die Komponenten der Leistungselektronik und anschließend das Öl des ersten Kreislaufes kühlen. Anschließend wird das nunmehr erhitzte Wasser weiter in die in die Pumpe gefördert. Der Kreislauf ist geschlossen.

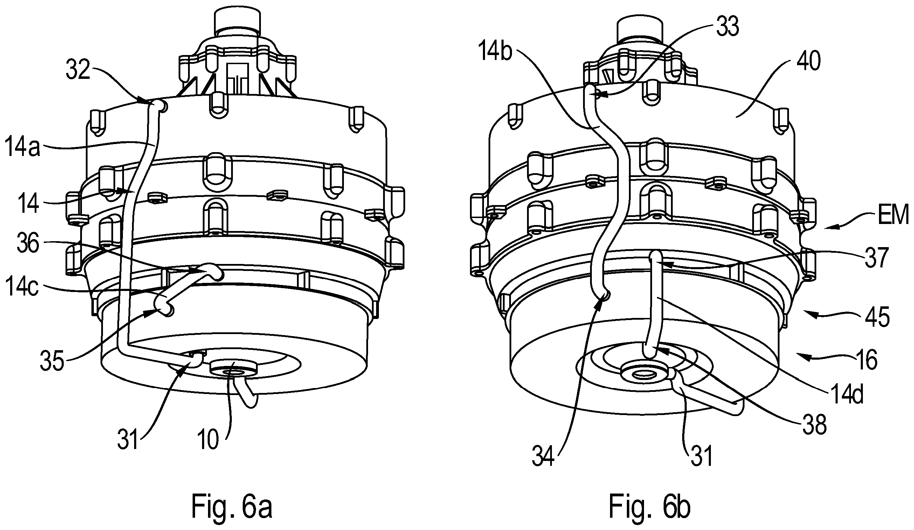

Die dritte Fluidleitung 14 ist in der Fig. 2 nur angedeutet. Figuren 6a bis 8b gehen detailliert auf den Kühlkreislauf ein, sodass auf diese verwiesen wird.

Fig. 2a zeigt den Kühlkreislauf in einer schematischen Ansicht.

Ausgehend von der Pumpe 10 wird das zweite Fluid radial nach außen 96 und anschließend axial nach oben 97 gepumpt. Das zweite Fluid tritt in den ersten Wärmetauscher 40 ein, was mit Pfeil 94 dargestellt ist, und kühlt an der Umgebungsluft ab. Das zweite Fluid durchläuft den ersten Wärmetauscher, was mit Pfeil 98 dargestellt ist, bevor es anschließend aus dem Wärmetauscher 40 austritt, was mit Pfeil 95 dargestellt ist. Anschließend wird es weiter nach unten 99 gepumpt. Es tritt in das Gehäuseteil ein, welches die Komponenten der Leistungselektronik 16 aufnimmt, und kühlt diese Komponenten. Dies ist mit einem Pfeil 91 dargestellt. Das zweite Fluid tritt aus dem Gehäuseteil der Leistungselektronik aus und tritt in den zweiten Wärmetauscher 45 ein, was mit Pfeil 93 dargestellt ist. Das zweite Fluid wird durch den Wärmetauscher 45 gepumpt, in welchem es das durch die Kühlung der Elektromaschine erwärmte erste Fluid abkühlt, ehe das zweite Fluid aus dem Wärmetauscher 45 wieder austritt, was mit Pfeil 92 dargestellt ist. Das zweite Fluid wird nun axial weiter nach unten und anschließend radial nach Innen zur Pumpe 10 gefördert.

Fig. 3 zeigt dieselbe Getriebevorrichtung aus Fig. 2, wobei die Volumina V1, V2 und V3 bezeichnet sind. Das Volumen V1 wirkt quasi als eine obere Ölkammer. Das Volumen V3 wirkt hingegen als eine untere Ölkammer, in welcher mit einem Ölnebel gekühlt wird. Das Volumen V3, d.h. der Förderraum, ist derjenige Raum zwischen Gewindestange 15 und Abtriebswelle 2, in welchem das Öl gefördert wird.

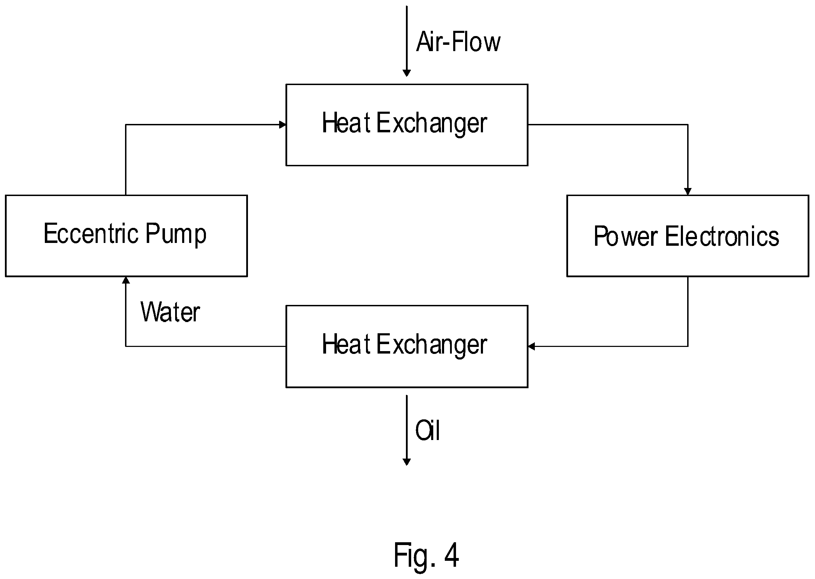

Fig. 4 zeigt schematisch den vorstehend beschriebenen Kühlkreislauf.

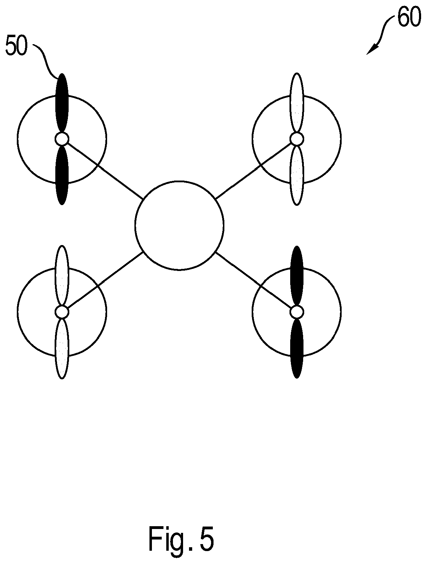

Fig. 5 zeigt einen Multicopter 60 in der Bauart eines Quadrocopters mit vier vorstehend beschriebenen Getriebevorrichtungen.

Figuren 6a bis 8b zeigen das Getriebe der Fig. 2 in weiteren Ansichten und soll insbesondere den Kühlkreislauf näher erläutern.

Fig. 6a und Fig.6b zeigen zwei Ansichten der Getriebevorrichtung wobei die Ansicht der Fig. 6b im Unterschied zur Ansicht gem. Fig. 6a um 180° um die Rotationsachse gedreht ist und um einige wenige Grad um eine Querachse gekippt ist. Fig. 6a repräsentiert sozusagen die linke Seite der Getriebevorrichtung gem. Fig. 2 während Fig. 6b die rechte Seite der Getriebevorrichtung aus Fig. 2 repräsentiert.

### Fig. 6a zu einem Zeitpunkt t1 :

Ausgehend von der Pumpe 10 wird das Wasser über einen Pumpenausgang 31 in einen ersten Leitungsabschnitt 14a der dritten Fluidleitung 14 gepumpt. Das Wasser verlässt die Pumpe mit einer hohen Temperatur. Es wird zunächst radial nach außen und anschließend axial nach oben in Richtung Propeller gepumpt. In Fig. 6a ist gut zu erkennen, dass der Leitungsabschnitt 14a außerhalb des Getriebes angeordnet ist. Am axial oberen Ende des Leitungsabschnitts 14a ist ein Eingang 32 des labyrinthförmigen Wärmetauschers angeordnet. Auf diesen wird nachfolgend noch eingegangen. Das heiße Wasser wird also in diesen Eingang 32 gepumpt kühlt nun an der Außenluft bzw. am Propellerabwind ab. Bei dem Eingang 32 handelt es sich demnach um einen Kühlereingang "Wasser-Luft".

### Fig. 6b zu einem Zeitpunkt t2 (t2>t1):

Das abgekühlte Wasser verlässt über einen Ausgang 33 den Wärmetauscher und wird im Anschluss über einen Leitungsabschnitt 14b nach axial unten gefördert. Bei dem Ausgang handelt es sich demnach um einen Kühlerausgang "Wasser-Luft". Der Leitungsabschnitt 14b, ist wie gut zu erkennen ist, außerhalb des Getriebes angeordnet. Das abgekühlte Wasser wird in einen Kühlereingang 34 der Leistungselektronik zum Kühlen der Komponenten der Leistungselektronik gefördert. Das abgekühlte Wasser wird nun an den warmen Komponenten der Leistungselektronik vorbeigepumpt, wobei sich das Wasser erwärmt. Auf der radial gegenüberliegenden Seite ist der Kühlerausgang 35 der Leistungselektronik angeordnet.

### Fig. 6a zu einem Zeitpunkt t3 (t3>t2)

Das Wasser tritt aus dem Kühlerausgang 35 heraus und wird über einen Leitungsabschnitt 14c, der außerhalb des Getriebes angeordnet ist, in einen Eingang 36 eines Wärmetauschers zum Abkühlen des Öls gepumpt. Bei dem Eingang 36 handelt es sich demnach um einen Kühlereingang "Wasser-Öl". Das erwärmte Wasser wird nun also genutzt, um die bei der Kühlung der Elektromaschine erhitzte Öl zu kühlen. Der Wärmetauscher, auf den nachfolgend noch eingegangen wird, ist ebenfalls labyrinthförmig aufgebaut.

### Fig. 6b zu einem Zeitpunkt t4 (t4>t2)

Das Wasser wird also durch das Labyrinth gepumpt und erwärmt dabei noch weiter. Das heiße Wasser verlässt den Wärmetauscher über einen Ausgang 37 und wird über einen Leitungsabschnitt 14d in einen Pumpeneingang 38 der Pumpe 10 gefördert. Der Leitungsabschnitt 14d ist außerhalb des Getriebes angeordnet. Bei dem Ausgang 37 handelt es sich um einen Kühlerausgang "Wasser-ÖI". Der Wasserkreislauf ist damit geschlossen.

Die Leitung 14 bzw. ihre Leitungsabschnitte 14a bis 14d sind Verbindungsleitungen oder -rohe. Die Leitungen können aber auch integraler Bestandteil der Gehäuseteile sein, also bspw. eingegossen sein.

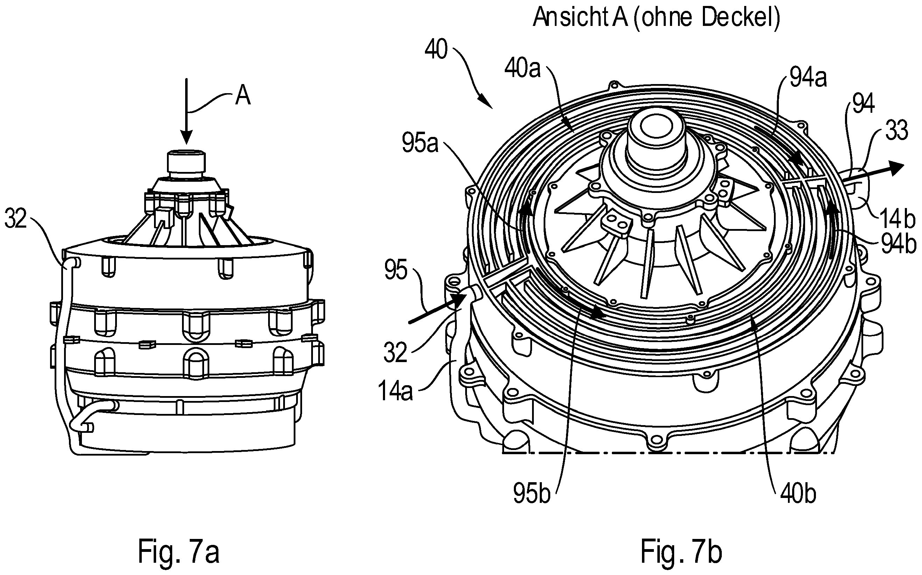

Fig. 7b zeigt einen vergrößerten Ausschnitt des Wärmetauschers 40 aus einer Vogelperspektive ohne den Gehäusedeckel. Der Betrachter hat hierbei die Ansicht A. Fig. 7a dient als Referenz. Der labyrinthförmig ausgebildete Wärmetauscher 40 ist Teil des oberen Gehäuseteiles, durch welches das Kühlmedium Wasser fließen kann.

Das Wasser wird über den Leitungsabschnitt 14a in den Kühlereingang 32 des Wärmetauschers 40 gepumpt. Das heiße Wasser tritt in Pfeilrichtung 95 in den Wärmetauscher 40 ein und wird radial Innen in zwei Labyrinthabschnitte 40a, 40b geleitet. Ein Teil des Wassers gelangt in den Abschnitt 40b, was mit einem Pfeil 95b dargestellt ist. Der andere Teil des Wassers gelangt in den Abschnitt 40a, was mit einem Pfeil 95a dargestellt ist.

Das Labyrinth führt das Wasser von radial Innen nach radial außen zum Ausgang 33, wo die Teile des Wassers aufeinandertreffen, was mit Pfeilen 94a und 94b angedeutet ist. Das Wasser verlässt anschließend in Pfeilrichtung 94 über den Kühlerausgang 33 den Wärmetauscher 40.

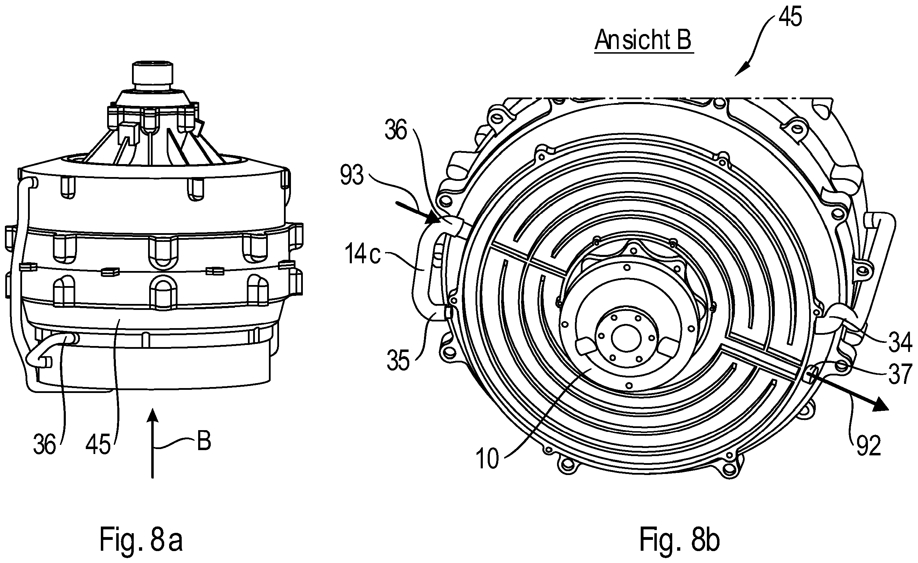

Fig. 8b zeigt einen vergrößerten Ausschnitt des Wärmetauschers 45 ohne den Gehäusedeckel. Der Betrachter hat hierbei die Ansicht B und schaut von unten nach oben. Fig. 8a dient als Referenz. Der labyrinthförmig ausgebildete Wärmetauscher 45 ist Teil des unteren Gehäuseteiles, durch welches das Kühlmedium Wasser fließen kann.

Das Wasser hat bereits die Komponenten der Leistungselektronik 16 gekühlt und wird nun über den Leitungsabschnitt 14c in den Kühlereingang 36 des Wärmetauschers 45 gepumpt. Das Wasser tritt in Pfeilrichtung 93 in den Wärmetauscher 45 ein und wird zum Kühlerausgang 37 geleitet. Das heiße Wasser verlässt den Wärmetauscher 45 über den Ausgang 37 in Pfeilrichtung 92. Das Wasser wird nun zur Pumpe gefördert. Der Kühlkreislauf ist geschlossen.

Der Ausschnitt der Fig. 8b dient der Veranschaulichung des zweiten Kühlkreislaufes. Nicht dargestellt sind die Komponenten der Leistungselektronik, die axial unterhalb des Wärmetauschers 45 angeordnet sind, Deckel des Wärmetauschers sowie die Leitungen von und zur Pumpe 10.

Mittels der erfindungsgemäßen Ausgestaltungen kann eine Getriebevorrichtung mit kompaktem Aufbau realisiert werden. Die Erfindung in Kombination mit den bevorzugten Merkmalen der Kühlkreisläufe und der Leistungselektronik ergeben eine kompakte und hoch integrierte Antriebseinheit.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann.

### Bezugszeichen

- 1: Antriebswelle
- 2: Abtriebswelle
- 10: Pumpe
- 11: Pumpenrad
- 12: erste Fluidleitung
- 13: zweite Fluidleitung
- 14: dritte Fluidleitung
- 14a: Leitungsabschnitt der dritten Fluidleitung
- 14b: Leitungsabschnitt der dritten Fluidleitung
- 14c: Leitungsabschnitt der dritten Fluidleitung
- 14d: Leitungsabschnitt der dritten Fluidleitung
- 15: Gewindestange, stangenförmiges Element
- 16: Komponenten der Leistungselektronik
- 17: Ölsumpf, Reservoir, Ölwanne
- 18: Dichtung
- 19: Lagerträger
- 20: Rotorträger
- 21: Filterelement, Sieb, Nebeldüse
- 31: Ausgang der Pumpe
- 32: Kühlereingang "Wasser-Luft"
- 33: Kühlerausgang "Wasser-Luft"
- 34: Kühlereingang Leistungselektronik
- 35: Kühlerausgang Leistungselektronik
- 36: Kühlereingang "Wasser-Öl"
- 37: Kühlerausgang "Wasser-Öl"
- 38: Eingang der Pumpe
- 40: Wärmetauscher
- 45: Wärmetauscher
- 50: Propeller
- 60: Multicopter, Quadrocopter
- 92: Pfeilrichtung
- 93: Pfeilrichtung
- 94: Pfeilrichtung
- 95: Pfeilrichtung
- 96: Pfeilrichtung
- 97: Pfeilrichtung
- 98: Pfeilrichtung
- 99: Pfeilrichtung
- G: Getriebevorrichtung, Getriebe
- RS: Radsatz
- GG: Drehfestes Bauelement
- P: Planetenradsatz
- E1: Erstes Element des Planetenradsatzes
- E2: Zweites Element des Planetenradsatzes
- E3: Drittes Element des Planetenradsatzes
- E21: Planet
- EM: Elektromaschine
- S: Stator
- R: Rotor

## Patentansprüche

1. Getriebevorrichtung (G) für einen Multicopter mit einer Antriebswelle (1), einer Abtriebswelle (2), einem Planetenradsatz (P) und einer Elektromaschine (EM), wobei der Planetenradsatz (P) mehrere Elemente aufweist, nämlich zumindest ein erstes Element (E1), ein zweites Element (E2) und ein drittes Element (E3) und wobei der Rotor (R) der Elektromaschine (EM) mit der Antriebswelle (1) in Verbindung steht, wobei
- die Antriebswelle (1) zudem mit dem ersten Element (E1) drehfest verbunden ist,
- die Abtriebswelle (2) mit dem zweiten Element (E2) drehfest verbunden ist,
- das dritte Element (E3) an einem drehfesten Bauelement (GG) festgesetzt ist,
- wobei zur Förderung eines ersten Fluids in einem ersten Fluidkreislauf zur Schmierung und/oder Kühlung der Komponenten der Getriebevorrichtung (16) eine Fördervorrichtung (15) innerhalb der als Hohlwelle ausgeführten Abtriebswelle (2) vorgesehen ist und zumindest eine erste Fluidleitung (12) vorgesehen ist, die ausgebildet ist, das innerhalb der Abtriebswelle (2) geförderte erste Fluid den Komponenten (16) zur Verfügung stellen,
**dadurch gekennzeichnet, dass** zur Förderung eines zweiten Fluids in einem zweiten Fluidkreislauf zur Kühlung von Komponenten einer Leistungselektronik (16) und/oder zur Kühlung des ersten Fluids eine Pumpe (10) vorgesehen ist, deren inneres Pumpenrad (11) mit der Abtriebswelle (2) drehfest verbunden ist.

2. Getriebevorrichtung nach Anspruch 1, wobei der zweite Fluidkreislauf eine dritte Fluidleitung (14) umfasst, durch welche das zweite Fluid gefördert werden kann, wobei die dritte Fluidleitung (14) derart angeordnet ist, dass
- das zweite Fluid in dem zweiten Fluidkreislauf zunächst in Wärmeaustausch mit einer kühleren Umgebungsluft und
- anschließend in Wärmeaustausch mit Komponenten der Leistungselektronik (16), und
- anschließend in Wärmeaustausch mit dem ersten Fluid treten kann,
- bevor das zweite Fluid mittels der Pumpe (10) erneut in Wärmeaustausch mit der Umgebungsluft treten kann.

3. Getriebevorrichtung nach Anspruch 2, wobei
- die dritte Fluidleitung vier Leitungsabschnitte aufweist, nämlich einen ersten, zweiten, dritten und vierten Leitungsabschnitt (14a, 14b, 14c, 14d),
- ein Pumpenausgang (31) die Pumpe (10) fluidtechnisch mit dem ersten Leitungsabschnitt (14a) verbindet,
- ein Kühlereingang (32) den ersten Leitungsabschnitt (14a) fluidtechnisch mit einem ersten Wärmetauscher (40) verbindet, wobei der erste Wärmetauscher (40) dazu eingerichtet ist, das zweite Fluid an der Umgebungsluft abzukühlen,
- ein Kühlerausgang (33) den ersten Wärmetauscher (40) fluidtechnisch mit dem zweiten Leitungsabschnitt (14b) verbindet,
- ein Eingang (34) den zweiten Leitungsabschnitt (14b) fluidtechnisch mit einem Gehäuseteil verbindet, in welchem Gehäuse die Komponenten der Leistungselektronik (16) angeordnet sind,
- ein Ausgang (35) das Gehäuseteil, in welchem Gehäuse die Komponenten der Leistungselektronik (16) angeordnet sind, fluidtechnisch mit dem dritten Leitungsabschnitt (14c) verbindet,
- ein Kühlereingang (36) dritten Leitungsabschnitt 14c fluidtechnisch mit einem Wärmetauscher (45) verbindet, wobei der Wärmetauscher (45) dazu eingerichtet ist, das erste Fluid an dem zweiten Fluid abzukühlen,
- Kühlerausgang (37) den Wärmetauscher (45) fluidtechnisch mit dem vierten Leitungsabschnitt (14d) verbindet,
- Ein Pumpeneingang (38) den vierten Leitungsabschnitt (14d) fluidtechnisch mit der Pumpe (10) verbindet.

4. Getriebevorrichtung nach einem der Ansprüche 1 bis 3, wobei die Fördervorrichtung ein am drehfesten Bauelement (GG) festgesetztes und in der Abtriebswelle (2) geführtes stangenförmiges Element (15) umfasst, welches an seinem Außenumfang ein Profil aufweist, das derart ausgebildet ist, dass das zur Verfügung gestellte erste Fluid bei rotierender Abtriebswelle (2) gegen die Schwerkraft gefördert wird.

5. Getriebevorrichtung nach einem der Ansprüche 1 bis 4,
- wobei die Getriebevorrichtung (G) ein erstes Volumen (V1) und ein zweites Volumen (V2) aufweist,
- wobei in dem ersten Volumen (V1) der Planetenradsatz (P) angeordnet ist und in dem zweiten Volumen (V2) die Elektromaschine (EM) angeordnet ist,
- wobei die erste Fluidleitung (12) den Hohlraum (V3) der Abtriebswelle (2) mit dem ersten Volumen (V1) fluidtechnisch verbindet,
- wobei das erste Volumen (V1) zudem ausgebildet ist, zumindest teilweise das erste Fluid zur Schmierung und/oder Kühlung der Elemente des Planetenradsatzes (P) aufzufangen,
- wobei eine zumindest zweite Fluidleitung (13) vorgesehen ist, die das erste Volumen (V1) mit dem zweiten Volumen (V2) fluidtechnisch verbindet,
- wobei die zwei Volumina und die erste Fluidleitung (12) derart konfiguriert sind, dass bei stillstehender Abtriebswelle (2) die Förderung des ersten Fluids vom ersten Volumen in das zweite Volumen verhindert wird und bei rotierender Abtriebswelle (2) zugelassen wird.

6. Getriebevorrichtung nach Anspruch 5,
- wobei in dem zweiten Volumen (V2) ein sich radial erstreckendes Element (20) angeordnet ist, das mit dem Rotor (R) der Elektromaschine (EM) und/oder mit der Antriebswelle (1) drehfest verbunden ist und welches ausgebildet ist, das aus dem ersten Volumen ins zweite Volumen geförderte erste Fluid aufzufangen,
- wobei ein Filterelement (21) vorgesehen ist, dass ausgebildet ist, das aufgefangene und anschließend radial nach außen geschleuderte erste Fluid in einen Fluidnebel zu wandeln.

7. Getriebevorrichtung nach Anspruch 6, wobei das Filterelement (21) an einem radial äußeren Ende des sich radial erstreckenden Elements (20) angeordnet ist.

8. Getriebevorrichtung nach einem der vorhergehenden Ansprüche, wobei die Komponenten der Leistungselektronik (16) koaxial zu den Wellen (1, 2) an einem axial unteren Ende der Getriebevorrichtung (G) angeordnet sind.

9. Getriebevorrichtung nach einem der vorhergehenden Ansprüche, wobei die Komponenten der Leistungselektronik (16) axial auf Höhe der Pumpe (10) und radial au-ßerhalb der Pumpe (10) angeordnet sind.

10. Multicopter mit einer Getriebevorrichtung nach einem der Ansprüche 1 bis 9.

11. Verfahren zur Erzeugung eines Fluidnebels innerhalb einer Getriebevorrichtung (G) nach einem der vorhergehenden Ansprüche, **dadurch gekennzeichnet, dass** zunächst ein erstes Fluid auf einen Rotorträger (20) einer Elektromaschine (EM), der einen Rotor (R) der Elektromaschine (EM) mit einer Welle (1) der Getriebevorrichtung (G) verbindet, gefördert wird und anschließend durch eine Drehung des Rotors (R) nach radial außen gegen ein Filterelement (21) geschleudert wird, sodass ein Fluidnebel entsteht, der die Elektromaschine (EM) benetzt.

## Claims

1. Transmission device (G) for a multicopter, having a drive shaft (1), an output shaft (2), a planetary gear set (P) and an electric machine (EM), wherein the planetary gear set (P) has a plurality of elements, specifically at least a first element (E1), a second element (E2) and a third element (E3), and wherein the rotor (R) of the electric machine (EM) is connected to the drive shaft (1), wherein
- the drive shaft (1) is furthermore connected rotationally conjointly to the first element (E1),
- the output shaft (2) is connected rotationally conjointly to the second element (E2),
- the third element (E3) is fixed to a rotationally fixed structural element (GG),
- wherein, for the conveyance of a first fluid in a first fluid circuit for the lubrication and/or cooling of the components of the transmission device (16), a conveying device (15) is provided within the output shaft (2) designed as a hollow shaft, and at least one first fluid line (12) is provided which is designed to provide the first fluid conveyed within the output shaft (2) to the components (16),
**characterized in that**, for the conveyance of a second fluid in a second fluid circuit for the cooling of components of power electronics (16) and/or for the cooling of the first fluid, a pump (10) is provided, the inner pump impeller (11) of which is connected rotationally conjointly to the output shaft (2).

2. Transmission device according to Claim 1, wherein the second fluid circuit comprises a third fluid line (14) through which the second fluid can be conveyed, wherein the third fluid line (14) is arranged such that
- the second fluid in the second fluid circuit can initially come into heat-exchanging contact with relatively cool ambient air and
- can subsequently come into heat-exchanging contact with components of the power electronics (16), and
- can subsequently come into heat-exchanging contact with the first fluid,
- before the second fluid can come into heat-exchanging contact with the ambient air again by means of the pump (10).

3. Transmission device according to Claim 2, wherein
- the third fluid line has four line sections, specifically a first, second, third and fourth line section (14a, 14b, 14c, 14d),
- a pump outlet (31) fluidically connects the pump (10) to the first line section (14a),
- a cooler inlet (32) fluidically connects the first line section (14a) to a first heat exchanger (40), wherein the first heat exchanger (40) is configured to cool the second fluid using the ambient air,
- a cooler outlet (33) fluidically connects the first heat exchanger (40) to the second line section (14b),
- an inlet (34) fluidically connects the second line section (14b) to a housing part, in which housing the components of the power electronics (16) are arranged,
- an outlet (35) fluidically connects the housing part, in which housing the components of the power electronics (16) are arranged, to the third line section (14c),
- a cooler inlet (36) fluidically connects third line section (14c) to a heat exchanger (45), wherein the heat exchanger (45) is configured to cool the first fluid using the second fluid,
- cooler outlet (37) fluidically connects the heat exchanger (45) to the fourth line section (14d),
- a pump inlet (38) fluidically connects the fourth line section (14d) to the pump (10).

4. Transmission device according to any of Claims 1 to 3, wherein the conveying device comprises a rod-like element (15) which is fixed to the rotationally fixed structural element (GG) and which is guided in the output shaft (2) and which, on its outer circumference, has a profile designed such that the provided first fluid is conveyed counter to gravitational force when the output shaft (2) rotates.

5. Transmission device according to any of Claims 1 to 4,
- wherein the transmission device (G) has a first volume (V1) and a second volume (V2),
- wherein the planetary gear set (P) is arranged in the first volume (V1) and the electric machine (VM) is arranged in the second volume (V2),
- wherein the first fluid line (12) fluidically connects the cavity (V3) of the output shaft (2) to the first volume (V1),
- wherein the first volume (V1) is furthermore designed to at least partially collect the first fluid for the lubrication and/or cooling of the elements of the planetary gear set (P),
- wherein an at least second fluid line (13) is provided which fluidically connects the first volume (V1) to the second volume (V2),
- wherein the two volumes and the first fluid line (12) are configured such that the conveyance of the first fluid from the first volume into the second volume is prevented when the output shaft (2) is stationary and is allowed when the output shaft (2) is rotating.

6. Transmission device according to Claim 5,
- wherein, in the second volume (V2), there is arranged a radially extending element (20) which is connected rotationally conjointly to the rotor (R) of the electric machine (EM) and/or to the drive shaft (1) and which is designed to collect first fluid conveyed from the first volume into the second volume,
- wherein a filter element (21) is provided which is designed to convert the collected and subsequently radially outwardly centrifuged first fluid into a fluid mist.

7. Transmission device according to Claim 6, wherein the filter element (21) is arranged at a radially outer end of the radially extending element (20).

8. Transmission device according to any of the preceding claims, wherein the components of the power electronics (16) are arranged coaxially with respect to the shafts (1, 2) at an axially lower end of the transmission device (G) .

9. Transmission device according to any of the preceding claims, wherein the components of the power electronics (16) are arranged axially at the height of the pump (10) and radially outside the pump (10).

10. Multicopter having a transmission device according to any of Claims 1 to 9.

11. Method for generating a fluid mist within a transmission device (G) according to any of the preceding claims, **characterized in that** a first fluid is firstly conveyed onto a rotor carrier (20) of an electric machine (EM), which connects a rotor (R) of the electric machine (EM) to a shaft (1) of the transmission device (G), and is subsequently, by way of a rotation of the rotor (R), centrifuged radially outward against a filter element (21) such that a fluid mist is formed which wets the electric machine (EM).

## Revendications

1. Dispositif de transmission (G) pour un multicoptère, comprenant un arbre d'entrée (1), un arbre de sortie (2), un train planétaire (P) et une machine électrique (EM), le train planétaire (P) présentant plusieurs éléments, notamment au moins un premier élément (E1), un deuxième élément (E2) et un troisième élément (E3), et le rotor (R) de la machine électrique (EM) étant relié à l'arbre d'entrée (1), dans lequel
- l'arbre d'entrée (1) est en outre relié de manière solidaire en rotation au premier élément (E1),
- l'arbre de sortie (2) est relié de manière solidaire en rotation au deuxième élément (E2),
- le troisième élément (E3) est immobilisé sur un composant solidaire en rotation (GG),
- dans lequel, pour transporter un premier fluide dans un premier circuit de fluide pour la lubrification et/ou le refroidissement des composants du dispositif de transmission (16), un dispositif de transport (15) est prévu à l'intérieur de l'arbre de sortie (2) réalisé sous la forme d'un arbre creux, et au moins un premier conduit de fluide (12) est prévu qui est réalisé pour fournir aux composants (16) le premier fluide transporté à l'intérieur de l'arbre de sortie (2),
**caractérisé en ce que** pour le transport d'un deuxième fluide dans un deuxième circuit de fluide pour le refroidissement des composants d'une électronique de puissance (16) et/ou pour le refroidissement du premier fluide, une pompe (10) est prévue dont la roue de pompe intérieure (11) est reliée de manière solidaire en rotation à l'arbre de sortie (2).

2. Dispositif de transmission selon la revendication 1, dans lequel le deuxième circuit de fluide comprend un troisième conduit de fluide (14) par lequel le deuxième fluide peut être transporté, le troisième conduit de fluide (14) étant disposé de telle sorte que
- le deuxième fluide dans le deuxième circuit de fluide peut entrer d'abord en échange thermique avec un air ambiant plus froid, et
- peut ensuite entrer en échange thermique avec les composants de l'électronique de puissance (16), et
- peut ensuite entrer en échange thermique avec le premier fluide,
- avant que le deuxième fluide ne puisse à nouveau entrer en échange thermique avec l'air ambiant au moyen de la pompe (10).

3. Dispositif de transmission selon la revendication 2, dans lequel
- le troisième conduit de fluide présente quatre sections de conduit, notamment une première, une deuxième, une troisième et une quatrième section de conduit (14a, 14b, 14c, 14d),
- une sortie de pompe (31) relie de manière fluidique la pompe (10) à la première section de conduit (14a),
- une entrée de refroidisseur (32) relie de manière fluidique la première section de conduit (14a) à un premier échangeur thermique (40), le premier échangeur thermique (40) étant aménagé pour refroidir le deuxième fluide à l'air ambiant,
- une sortie de refroidisseur (33) relie de manière fluidique le premier échangeur thermique (40) à la deuxième section de conduit (14b),
- une entrée (34) relie de manière fluidique la deuxième section de conduit (14b) à une partie de boîtier, boîtier dans lequel sont disposés les composants de l'électronique de puissance (16),
- une sortie (35) relie de manière fluidique la partie de boîtier, boîtier dans lequel sont disposés les composants de l'électronique de puissance (16), à la troisième section de conduit (14c),
- une entrée de refroidisseur (36) relie de manière fluidique la troisième section de conduit (14c) à un échangeur thermique (45), l'échangeur thermique (45) étant aménagé pour refroidir le premier fluide au niveau du deuxième fluide,
- une sortie de refroidisseur (37) relie de manière fluidique l'échangeur thermique (45) à la quatrième section de conduit (14d),
- une entrée de pompe (38) relie de manière fluidique la quatrième section de conduit (14d) à la pompe (10).

4. Dispositif de transmission selon l'une quelconque des revendications 1 à 3, le dispositif de transport comprenant un élément (15) en forme de barre immobilisé sur le composant solidaire en rotation (GG), guidé dans l'arbre de sortie (2), et qui présente sur sa circonférence extérieure un profil qui est réalisé de telle sorte que le premier fluide fourni est transporté à l'encontre de la force de pesanteur lorsque l'arbre de sortie (2) tourne.

5. Dispositif de transmission selon l'une quelconque des revendications 1 à 4, dans lequel
- le dispositif de transmission (G) présente un premier volume (V1) et un deuxième volume (V2),
- le train planétaire (P) est disposé dans le premier volume (V1), et la machine électrique (EM) est disposée dans le deuxième volume (V2),
- le premier conduit de fluide (12) relie de manière fluidique l'espace creux (V3) de l'arbre de sortie (2) au premier volume (V1),
- le premier volume (V1) est en outre réalisé pour capter au moins en partie le premier fluide pour la lubrification et/ou le refroidissement des éléments du train planétaire (P),
- au moins un deuxième conduit de fluide (13) est prévu qui relie de manière fluidique le premier volume (V1) au deuxième volume (V2),
- les deux volumes et le premier conduit de fluide (12) étant configurés de telle sorte que lorsque l'arbre de sortie (2) est à l'arrêt, le transport du premier fluide du premier volume dans le deuxième volume est empêché, et lorsque l'arbre de sortie (2) tourne, le transport est autorisé.

6. Dispositif de transmission selon la revendication 5, dans lequel
- dans le deuxième volume (V2) est disposé un élément (20) s'étendant radialement qui est relié de manière solidaire en rotation au rotor (R) de la machine électrique (EM) et/ou à l'arbre d'entrée (1), et qui est réalisé pour capter le premier fluide transporté du premier volume dans le deuxième volume,
- un élément filtrant (21) est prévu qui est réalisé pour transformer en brouillard de fluide le premier fluide capté et ensuite projeté radialement vers l'extérieur.

7. Dispositif de transmission selon la revendication 6, dans lequel l'élément filtrant (21) est disposé à une extrémité radialement extérieure de l'élément (20) s'étendant radialement.

8. Dispositif de transmission selon l'une quelconque des revendications précédentes, dans lequel les composants de l'électronique de puissance (16) sont disposés coaxialement aux arbres (1, 2) à une extrémité axialement inférieure du dispositif de transmission (G) .

9. Dispositif de transmission selon l'une quelconque des revendications précédentes, dans lequel les composants de l'électronique de puissance (16) sont disposés axialement au niveau de la pompe (10) et radialement à l'extérieur de la pompe (10).

10. Multicoptère, comprenant un dispositif de transmission selon l'une quelconque des revendications 1 à 9.

11. Procédé de génération d'un brouillard de fluide à l'intérieur d'un dispositif de transmission (G) selon l'une quelconque des revendications précédentes, **caractérisé en ce que** d'abord un premier fluide est transporté sur un support de rotor (20) d'une machine électrique (EM) qui relie un rotor (R) de la machine électrique (EM) à un arbre (1) du dispositif de transmission (G), et est ensuite projeté par une rotation du rotor (R) radialement vers l'extérieur contre un élément filtrant (21) de sorte qu'un brouillard de fluide se forme qui humecte la machine électrique (EM).
